# EUROPÄISCHE PATENTSCHRIFT

(11) **EP 1 275 857 B1**
(45) Veröffentlichungstag und Bekanntmachung des Hinweises auf die Patenterteilung: **03.11.2004**
(21) Anmeldenummer: 02015550.3
(22) Anmeldetag: 11.07.2002
(51) Int. Cl.: F16B 5/12, B60R 13/04, B60R 13/02

(54) **Vormontierbares Befestigungselement für hinterschnittene Montagen**
Pre-mountable fastening element for undercut assemblies
Elément de fixation pré-montable pour assemblages contre-dépouillés

(30) Priorität: 14.07.2001 DE 10134325
(43) Veröffentlichungstag der Anmeldung: 15.01.2003
(73) Patentinhaber: WKW Erbslöh Automotive GmbH, 42349 Wuppertal (DE)
(72) Erfinder: Warburg, Dierk, 42553 Velbert (DE)
(74) Vertreter: Sparing, Rolf Klaus

(56) Entgegenhaltungen:
- DE-A- 2 236 766
- DE-A- 10 029 544
- US-A- 2 685 721

## Beschreibung

Die vorliegende Erfindung betrifft ein Befestigungssystem mit einem Anbauteil und einem Befestigungselement zur Vormontage an dem Anbauteil und zur hinterschnittenen kraft- und formschlüssigen Montage des Anbauteils an einer ein Montageloch aufweisenden flächigen Struktur, wobei das Anbauteil eine im wesentlichen rechteckförmige Durchbrechung und zwei wenigstens in der Projektion auf die Ebene der rechteckförmigen Durchbrechung parallel zu deren kurzen Seiten und innerhalb einer Verlängerung von deren langen Seiten angeordnete, im wesentlichen schlitzförmige Durchbrechungen aufweist. Ferner betrifft die Erfindung eine Verwendung des erfindungsgemäßen Befestigungssystems.

Um Anbauteile an einer flächigen Struktur hinterschnitten zu befestigen sind eine Reihe von Befestigungsmitteln bekannt geworden. Beispielsweise werden Befestigungselemente eingesetzt, bei denen die Anbauteile durch hinterschneidende Spreizschenkel mit der flächigen Struktur verklemmt werden. Dabei wird zunächst eine Stellschraube zum Spreizen der Spreizschenkel durch das Anbauteil geführt und anschließend die Spreizschenkel des so mit dem Anbauteil verbundenen Befestigungselements in ein Montageloch der flächigen Struktur eingebracht. Dann werden die Spreizschenkel angezogen, wodurch das Anbauteil mit der flächigen Struktur verklemmt wird.

Nach einem anderen Beispiel (US 2685721 A) ist zur Befestigung von Montageteilen eine Befestigungsklammer mit Federarmen zum hinterschneidenden Eingriff hinter ein Montageloch vorgesehen.

Das seitliche Ausstellen der Federarme erfolgt mittels eines Montagebolzens.

Bei den im Stand der Technik bekannten Systemen ist ferner nachteilig, dass Montagetoleranzen aufgrund der vorgegebenen festen Montageposition des Anbauteiles durch die an vorbestimmten Stellen angebrachten Befestigungsmittel nicht oder nur in beschränktem Maße ausgeglichen werden können.

Darüber hinaus fehlt beim Stand der Technik die Möglichkeit einer einfachen Vorverklemmung des Anbauteiles um dessen Herabfallen während der Montage zu verhindern. Ohne eine solche Vorverklemmung ist jedoch eine "dritte helfende Hand", d. h. eine weitere Person zum Halten des Anbauteiles bei dessen Montage vonnöten.

Aufgabe der vorliegenden Erfindung ist es deshalb, ein vormontierbares Befestigungselement zur hinterschneidenden Montage eines Anbauteiles anzugeben, das die bei den herkömmlichen hinterschneidenden Befestigungsmitteln auftretenden Nachteile überwindet.

Diese Aufgabe wird durch ein Befestigungssystem gemäß den Merkmalen des unabhängigen Anspruchs gelöst. Vorteilhafte Ausgestaltungen der Erfindung sind durch die Unteransprüche angegeben. Erfindungsgemäß wird ein Befestigungssystem mit einem Befestigungselement zur Vormontage an einem Anbauteil und zur hinterschnittenen kraft- und formschlüssigen Montage des Anbauteils an einer ein Montageloch aufweisenden flächigen Struktur angegeben. Zur Vormontage des Befestigungselements am Anbauteil ist das Anbauteil mit einer im wesentlichen rechteckförmigen Durchbrechung, sowie zwei wenigstens in der Projektion auf die Ebene der rechteckförmigen Durchbrechung parallel zu deren kurzen Seiten und innerhalb einer Verlängerung deren langen Seiten angeordneten im wesentlichen schlitzförmigen Durchbrechungen versehen.

Das erfindungsgemäße Befestigungselement zeichnet aus, dass es wenigstens zwei einander gegenüberliegend angeordnete Federarme zum Einfügen in die im wesentlichen schlitzförmigen Durchbrechungen des Anbauteils und ein Befestigungsmittel zur Befestigung des am Anbauteil vormontierten Befestigungselements an der flächigen Struktur aufweist. Das Befestigungsmittel wird hierzu in das Montageloch eingefügt und gelangt in hinterschneidenden Eingriff mit der flächigen Struktur.

Durch Einfügen der Federarme in die schlitzförmigen Durchbrechungen des Anbauteiles entsteht eine Stützführung, durch welche das Befestigungselement am Anbauteil befestigt wird. Sind die schlitzförmigen Durchbrechungen geeignet angeordnet, kann die Befestigung dabei alleinig durch eine elastische Verspannung der Federarme erfolgen, nachdem diese in die schlitzförmigen Durchbrechungen eingefügt worden sind. Vorzugsweise sind die schlitzförmigen Durchbrechungen jedoch so angeordnet, dass die Federarme nach Einfügen elastisch entspannt sind. Praktischerweise erfolgt dies durch Spannen der Federarme, beispielsweise durch eine Zange, wodurch die Federarme in die schlitzförmigen Durchbrechungen eingefügt werden können.

Hieraus resultiert im allgemeinen eine Verschieblichkeit des Befestigungselements relativ zum Anbauteil, mit der Folge dass das Befestigungselement nicht sicher vormontiert ist, weil ein Federarm durch diese Bewegung des Befestigungselements aus seiner schlitzartigen Durchbrechung gleiten kann. In diesem Fall ist für eine sichere Vormontage des Befestigungselements am Anbauteil dafür Sorge zu tragen, dass die Verschieblichkeit des Befestigungselement relativ zum Anbauteil durch entsprechende Vorkehrungen beschränkt wird.

Ein solche Vorkehrung ist vorzugsweise durch eine geeignete Verformung eines Federarms, insbesondere in Form eines Knicks gegeben, welche bei Bewegung des Befestigungsmittels in Einfügerichtung dieses Federarms zur Anlage gegen das Anbauteil gelangt. Zur sicheren Vormontage des Befestigungselements am Anbauteil müssen im allgemeinen beide gegenüberliegende Federarme eine solche Verformung aufweisen, und es muß zudem gewährleistet sein, dass bei einer Bewegung des Befestigungsmittels in die Einfügerichtung eines Federarms die Verformung eines Federarms so rechtzeitig zur Anlage gegen das Anbauteil kommt, dass der gegenüberliegende Federarm nicht aus der schlitzförmigen Durchbrechung gelangt. Gleichzeitig wird durch die Verschieblichkeit des Befestigungselements relativ zum Anbauteil in vorteilhafter Weise eine Möglichkeit zum Ausgleich von Montagetoleranzen in der Längsrichtung der rechteckförmigen Durchbrechung des Anbauteils geschaffen. Der maximal mögliche Abstand einer Verformung von der Position in der sie zur Anlage gegen das Anbauteil gelangt, definiert gleichzeitig den maximal möglichen Toleranzausgleich in dieser Richtung.

Eine Möglichkeit zum Ausgleich von Montagetoleranzen in der hierzu senkrechten Richtung ist gegeben, wenn die Federarme in Bezug auf die Länge der schlitzförmigen Durchbrechungen so dimensioniert sind, dass hieraus eine merkliche Verschieblichkeit des Befestigungselements relativ zum Anbauteil resultiert.

Ein andere Möglichkeit bei elastisch entspannten Federarmen die Verschieblichkeit des Befestigungselements relativ zum Anbauteil zu begrenzen besteht darin, die Federarme mit endständigen Laschen zum Einfügen in die Durchbrechungen zu versehen.

Sind die Laschen schmäler als die Federarme und können gleichzeitig nur die Laschen aufgrund ihrer geringeren Breite in die schlitzförmigen Durchbrechungen eingefügt werden, gelangen auch die die Lasche überragenden Teile eines Federarms bei Verschiebung des Befestigungselements in Einfügerichtung des Federarms zur Anlage gegen das Anbauteil. Dabei wird eine sichere Vormontage des Befestigungselements gewährleistet, wenn die Federarme nicht aus den schlitzförmigen Durchbrechungen gleiten können. In vorteilhafter Weise wird aufgrund der Verschieblichkeit des Befestigungselements eine weitere Möglichkeit zum Toleranzausgleich in Längsrichtung der rechteckförmigen Durchbrechung des Anbauteils geschaffen. Sind die Laschen wesentlich schmäler als die schlitzförmigen Durchbrechungen wird zusätzlich eine Möglichkeit zum Toleranzausgleich in der Querrichtung der rechteckförmigen Durchbrechung des Anbauteils geschaffen.

Ein wesentliches Merkmal der Erfindung ist, dass die Federarme zum Einfügen in die schlitzförmigen Durchbrechungen des Anbauteils so angestellt sind, dass das Befestigungselement und insbesondere das Befestigungsmittel zur Befestigung des vormontierten Befestigungselements an der flächigen Struktur in vorteilhafter Weise entgegen der Richtung, in der das Anbauteil an die flächige Struktur gefügt wird, versetzt wird. Durch das Anstellen der Federarme und das damit verbundene Zurücksetzen des Befestigungsmittels wird somit, im Gegensatz zu herkömmlichen hinterschneidenden Befestigungselementen, eine formschlüssige Fügung des Anbauteils mit vormontiertem Befestigungselement an die flächige Struktur überhaupt erst ermöglicht.

In vorteilhafter Weise ist das Befestigungsmittel zur Befestigung des am Anbauteil vormontierten Befestigungselements an der flächigen Struktur aus wenigstens zwei, einander gegenüberliegend angeordneten Spreizschenkeln gebildet.

Zur Befestigung eines solchen vormontierten Befestigungselements an der flächigen Struktur, wird das Anbauteil zunächst an die flächige Struktur gefügt, und die Spreizschenkel durch mechanischen Druck entgegen der elastischen Kräfte der in die schlitzförmigen Durchbrechungen eingefügten Federarme und der Spreizschenkel in das Montageloch eingefügt bis die Schenkelknie der Spreizschenkel hinter die flächige Struktur gelangen. Dort befinden sie sich bereits in hinterschneidenden Eingriff mit der flächigen Struktur. Der mechanische Druck wird beispielsweise durch die Daumenkraft des Monteurs aufgebracht.

Das Anbauteil befindet sich nun im allgemeinen in einer vorläufigen, noch nicht endgültig befestigten Position, in der die Möglichkeit zum Ausgleich von Montagetoleranzen noch gegeben ist. Neben den bereits dargestellten Möglichkeiten Montagetoleranzen durch die Verschiebbarkeit des Befestigungselements relativ zum Anbauteil auszugleichen, besteht ergänzend die Möglichkeit das Anbauteil mit dem vormontierten Befestigungselement senkrecht zur Spreizrichtung der Spreizschenkel im Montageloch zu bewegen.

Bei einer vorteilhaften Ausführungsform der Erfindung können die Schenkelteile eines Spreizschenkels einen unterschiedlichen Winkel zur Verbindungslinie der Schenkelknie zweier gegenüberliegender Spreizschenkel aufweisen. Insbesondere kann der in Fügerichtung vorauseilende Schenkelteil einen größeren Winkel zur Verbindungslinie der Schenkelknie zweier gegenüberliegender Spreizschenkel einnehmen als der nacheilende Schenkelteil, wodurch der Durchtritt durch das Montageloch erleichtert wird.

Um das Anbauteil, gegebenenfalls unter Ausnutzung der Möglichkeiten zum Ausgleich der Montagetoleranzen, in seiner endgültigen Montageposition sicher zu befestigen, werden die Spreizschenkel stärker gespreizt und das Anbauteil an der flächigen Struktur verklemmt.

Eine stärkere Spreizung der Spreizschenkel erfolgt vorzugsweise durch Einsatz einer entsprechenden Stellschraube. Jedoch kann jedes beliebige Stellglied zum Spreizen der Spreizbeine eingesetzt werden, wobei die Endposition der Spreizschenkel nicht nur durch das Stellglied, sondern beispielsweise auch durch entsprechende Raststufen in den Spreizschenkeln fixiert werden kann.

Eine bevorzugte Ausführungsform der Erfindung sieht vor, dass die Federarme zum Einfügen in die schlitzförmigen Durchbrechungen des Anbauteils jeweils wenigstens zwei über den Rand der im wesentlichen rechteckförmgen Durchbrechung des Anbauteils ragende Laschen aufweisen, welche bei Montage des Anbauteils an der flächigen Struktur zur formschlüssigen Auflage auf dem Anbauteil gelangen. Die hierdurch bewirkte relative Annäherung der Kraftangriffspunkte des Befestigungselements wirkt sich sehr vorteilhaft auf die Festigkeit des Form- und Kraftschlusses der Verbindung aus.

Um eine kompaktere Verbindung zu erstellen, ist es ferner vorteilhaft, wenn die Federarme so geformt sind, dass sie bei erfolgter Montage des Anbauteils an der flächigen Struktur zur Anlage gegen die flächige Struktur gelangen, diese also über eine komplementäre Struktur verfügen.

Um die Federarme zum Einfügen in die schlitzförmigen Durchbrechungen des Anbauteils zu versteifen, können diese mit versteifenden Verprägungen, insbesondere Sicken versehen sein.

Ebenso können in den knickförmigen Verformungen der Federarme, welche verhindern, dass sich das Befestigungselement von dem Anbauteil löst, und welche als "Gelenke" bei der Montage des Anbauteils an der flächigen Struktur fungieren, mit schwächenden Ausstanzungen ("Augen") versehen sein, wodurch die Montage des Anbauteils erleichtert wird.

Die Federarme sind zur Erzeugung der elastischen Kraft aus einem elastischem Material, vorzugsweise Federstahlblech oder Kunststoff gefertigt. Die Stärke liegt vorzugsweise im Bereich von 0,5 bis 2 mm, insbesondere bevorzugt im Bereich von 0,5 bis 1 mm.

Schließlich sei noch bemerkt, dass durch die Federwirkung der Federarme auch Montagetoleranzen des Befestigungselements in der Fügerichtung des Anbauteils ausgeglichen werden können.

Die Erfindung wird nunmehr anhand eines in den Figuren 1 bis 4 dargestellten Ausführungsbeispiels näher erläutert.
- Fig. 1: zeigt eine Schnittansicht eines Ausführungsbeispiels eines am Anbauteil vormontierten erfindungsgemäßen Befestigungselements, wobei das Anbauteil an die flächige Struktur angefügt ist (obere Abbildung), sowie einen Schnitt durch die Linie A-A in halbierter Darstellung (untere Abbildung);
- Fig. 2: zeigt eine Draufsicht auf das in Fig. 1 dargestellte Ausführungsbeispiel des erfindungsgemäßen Befestigungselementes (halbierte Darstellung);
- Fig. 3: zeigt eine Schnittansicht des vormontierten Befestigungselements von Fig. 1 und 2 im Zustand nach Montage des Anbauteils an der flächigen Struktur (halbierte Darstellung);
- Fig. 4: zeigt jeweils einen Schnitt (halbierte Darstellung) durch die Linie B-B von Fig. 3 im vorläufig montierten Zustand des Anbauteils (obere Abbildung) und im fertig montierten Zustand des Anbauteils (untere Abbildung).

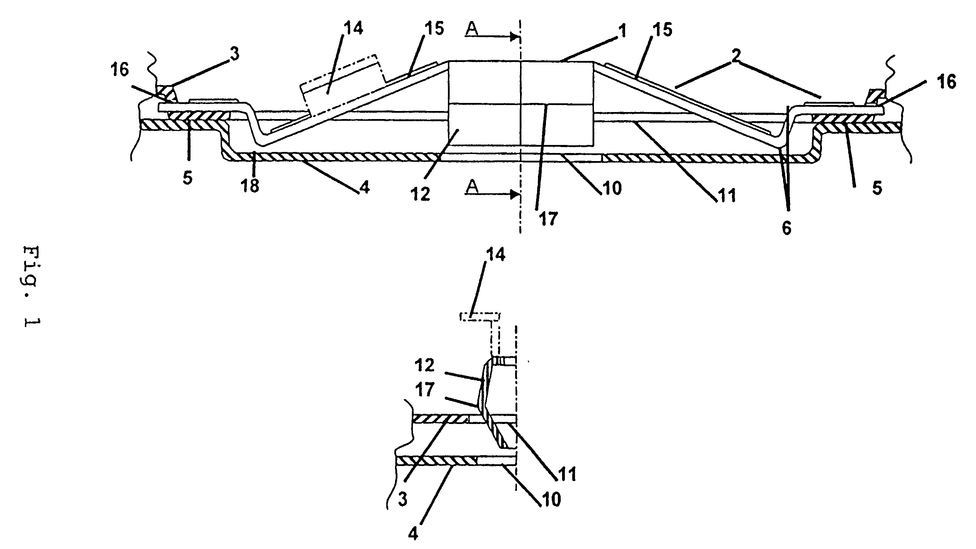

Fig. 1 zeigt in der oberen Abbildung das am Anbauteil 3 vormontierte Befestigungselement 1, wobei sich das Anbauteil 3 in Fügestellung an der flächigen Struktur befindet. Das Anbauteil 3 und die flächige Struktur 4 sind in der Auflagefläche 5 aneinander gefügt. Das Anbauteil 3 weist eine rechteckförmige Durchbrechung 11, sowie zwei gegenüberliegend angeordnete schlitzförmige Durchbrechungen 16 auf. Die flächige Struktur 4 ist mit einem Montageloch 10 versehen.

Wie in Fig. 1 ersichtlich ist, umfasst das erfindungsgemäße Befestigungselement 1 die Federarme 15 zum Einfügen in die schlitzförmigen Durchbrechungen 16 des Anbauteils 3. Da die Enden der Federarme 15 einen größeren Abstand voeinander einnehmen als die entsprechende Entfernung der schlitzförmigen Durchbrechungen 16 ist, müssen die Federarme 15 zum Einfügen des Befestigungselements 1 in die schlitzförmigen Durchbrechungen 16 entgegen ihrer elastischen Federkraft so gebogen werden, dass sie in die schlitzförmigen Durchbrechungen 16 eingeführt werden können. Nach Einfügen der Federarme 15 in die schlitzförmigen Durchbrechungen 16 sind diese elastisch entspannt. Um zu gewährleisten, dass das Befestigungselement 1 nicht aus seiner Stützführung gelangt, weisen die Federarme 15 jeweils knickförmige Verformungen 6 auf, die zur Anlage gegen das Anbauteil 3 gelangen, wenn das Befestigungselement in Einfügerichtung eines Federarms 15 bewegt wird. Die flächige Struktur 4 weist eine Einsenkung 19 mit einer zu den knickförmigen Verformungen 6 der Federarme 15 komplementären Form auf.

Die Verschieblichkeit des Befestigungselements bis zur jeweiligen Anlage der knickförmigen Verformungen 6 gegen das Anbauteil 3 schafft die Möglichkeit zum Ausgleich von Montagetoleranzen in Längsrichtung der rechteckförmigen Durchbrechung 11.

Die Federarme 15 weisen ferner Laschen 14 auf, die bei Montagestellung des Anbauteils und fixiertem Befestigungselement zur Anlage gegen das Anbauteil 3 gelangen. Hierdurch wird der Form- und Kraftschluss der Verbindung verbessert.

Die Federarme 15 sind in Fügerichtung des Anbauteiles 3 angestellt, wodurch das Befestigungselement 1 so weit entgegen der Fügerichtung versetzt wird, dass das Anbauteil 3 an die flächige Struktur 4 bündig gefügt werden kann, ohne dass das die flächige Struktur 4 hinterschneidende Befestigungselement 1hierbei im Weg ist.

Das Befestigungselement weist weiterhin zwei Spreizschenkel 12 zur Befestigung des Anbauteils 3 an der flächigen Struktur 4 auf. Diese werden zur Montage in Montageloch 10 der flächigen Struktur 4 eingefügt. Die Form der Spreizschenkel 12 ist in der unteren Abbildung von Fig. 1, die einen Schnitt durch die Linie A-A- zeigt, zu erkennen. Die Spreizschenkel 12 sind mit einem Schenkelknie 17 versehen. Da das Montageloch 10 verglichen mit der Strecke der direkten Verbindung zwischen den Schenkelknie 17 der beiden gegenüberliegenden Spreizschenkel 12 einen geringeren Querdurchmesser hat, müssen die Spreizschenkel entgegen ihrer elastischen Federkraft verformt werden, damit die Schenkelknie 17 hinter die flächige Struktur 4 gelangen können.

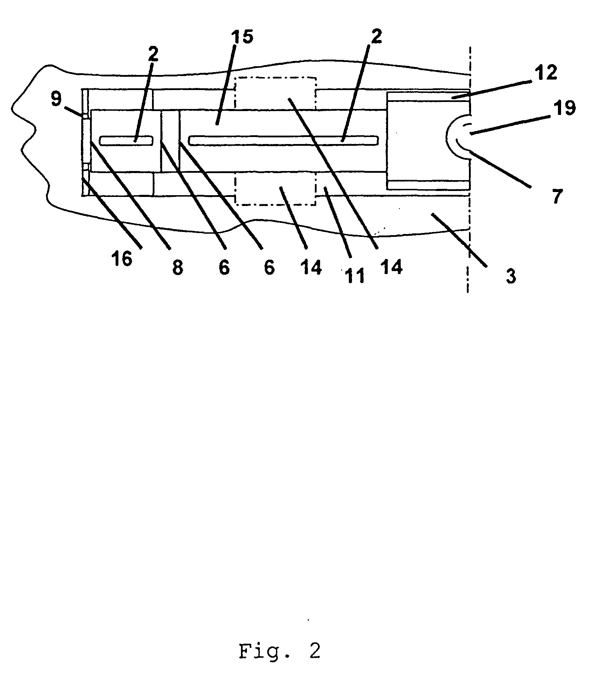

Fig. 2 zeigt eine Draufsicht auf die in Fig. 1 gezeigte Ausführungsform des erfindungsgemäßen Befestigungselements in halbierter Darstellung. In Fig. 2 ist der Federarm 15 zu erkennen, der mit einer endständigen Lasche 8 zum Einfügen in die schlitzförmige Durchbrechung 9 versehen ist. Die endständige Lasche 8 ist so dimensioniert, dass sie mit lateralem Spiel 9 in die schlitzförmige Durchbrechung eingefügt wird; dies schafft durch die hierbei erzeugte Verschieblichkeit des Befestigungselements die Möglichkeit Montagetoleranzen in Querrichtung der rechteckförmigen Durchbrechung 11 des Anbauteils 3 auszugleichen.

Ferner ist der Federarm 15 mit zwei Sicken 2 zur Versteifung versehen. Zum Verstellen der Spreizung der Spreizschenkel 12 ist eine Stellschraube 19 angeordnet.

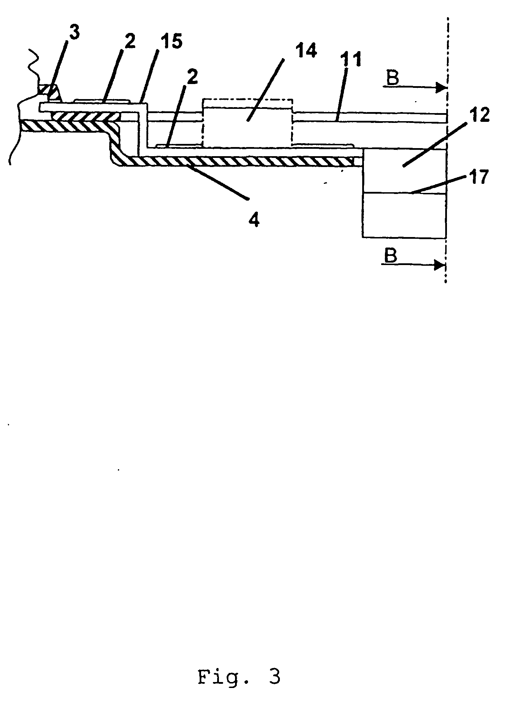

Fig. 3 zeigt eine Schnittansicht des vormontierten Befestigungselements von Fig. 1 und 2 im Zustand nach Montage des Anbauteils an der flächigen Struktur in einer halbierten Darstellung. Die Spreizschenkel 12 sind soweit in das Montageloch eingeführt (und greifen dabei hinterschneidend in die flächige Struktur ein) dass der Federarm 15 zur vollen Anlage gegen die flächige Struktur 4 gelangt. Durch die komplementäre Form zwischen Federarm 15 und flächiger Struktur 4 ist eine vollständige Anlage ermöglicht. Eine vollständige Anlage des Federarms 15 ist jedoch nicht zwingend erforderlich. Vielmehr können durch die elastische Verformbarkeit des Federarms 15 auch Montagetoleranzen in Fügerichtung des Anbauteils ausgeglichen werden.

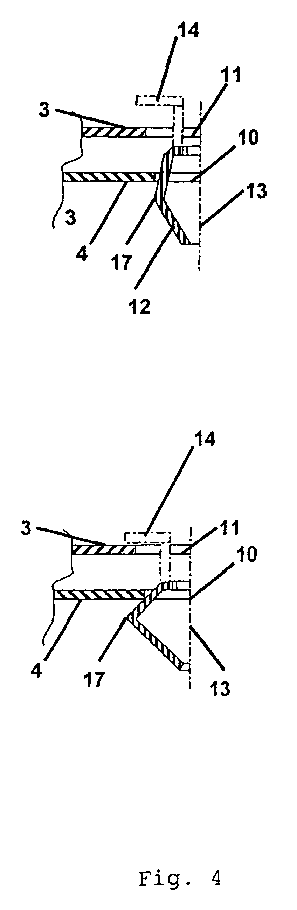

In Fig. 4 sind zwei Schnitte durch die in Fig. 3 mit B-B bezeichnete Linie dargestellt. Die obere Abbildung zeigt das Anbauteil 3 in einer vorläufig montierten Stellung. Hierbei sind die Spreizschenkel 12 entgegen deren elastischen Federkraft so weit durch das Montageloch 10 gedrückt worden (beispielsweise durch Daumendruck auf das Befestigungselement), dass die Schenkelknie 17 hinter die flächige Struktur 4 gelangen, woraus sich ein hinterschneidender Eingriff mit der flächigen Struktur ergibt. In dieser Stellung können noch Montagetoleranzen ausgeglichen werden.

In der unteren Abbildung von Fig. 4 ist die fixierte Stellung des Befestigungselements dargestellt. Hierbei wurden die Spreizschenkel 12 durch Eindrehen der Stellschraube 19 angezogen und das Befestigungselement 1 und somit das Anbauteil 3 an der flächigen Struktur 4 fixiert. Die Lasche 14 kommt dann zur formschlüssigen Anlage gegen das Anbauteil 3. Durch die Lasche 14 wird ferner der Kraftschluss der Verbindung verbessert, weil die Kraftansatzpunkte zwischen Spreizschenkeln 12 und Federarmen 15 einander angenähert werden.

Die Erfindung ist nicht auf eine im wesentlichen reckteckförmige Durchbrechung des Anbauteiles eingeschränkt. Im Sinne der Erfindung kann diese Durchbrechung auch eine quadratische Form, oder jeder andere Form annehmen, solange gewährleistet ist, dass das Befestigungselement über die Federarme 15 hinreichend fest vormontiert und das Befestigungsmittel zur Befestigung des Anbauteils durch die Durchbrechung in das Montageloch 10 geführt werden kann. Ebenso kann das Montageloch 10 jede beliebige Form annehmen, solange das Befestigungsmittel, insbesondere in Form von Spreizschenkeln, durchgeführt werden kann und in hinterschneidenden Eingriff mit der flächigen Struktur gelangt. Ferner können die Federarme 15 auch durch starre Elemente, die über gespannte Gelenke verbunden sind, ersetzt werden. Das Befestigungsmittel zur Befestigung des Anbauteils an der flächigen Struktur kann erfindungsgemäß auch in Form eines Drehverschlusses, einer Schraub- oder Nietverbindung vorliegen.

Sowohl das Befestigungselement wie auch das Anbauteil enthalten für sich erfinderische Merkmale und bilden zusammen ein Befestigungssystem, das die erfindungsgemäße Aufgabe löst.

Eine bevorzugte Verwendung des erfindungsgemäßen Befestigungselements ist die Befestigung von Anbauteilen im Automobilbau, insbesondere die Befestigung von Türblenden an Türkarossieabschnitten.

## Patentansprüche

1. Befestigungssystem mit einem Anbauteil (3) und einem Befestigungselement (1) zur Vormontage an dem Anbauteil (3) und zur hinterschnittenen kraft- und formschlüssigen Montage des Anbauteils (3) an einer ein Montageloch (10) aufweisenden flächigen Struktur (4), wobei das Anbauteil eine im wesentlichen rechteckförmige Durchbrechung (11) und zwei wenigstens in der Projektion auf die Ebene der rechteckförmigen Durchbrechung (11) parallel zu deren kurzen Seiten und innerhalb einer Verlängerung von deren langen Seiten angeordnete, im wesentlichen schlitzförmige Durchbrechungen (16) aufweist, und wobei das Befestigungselement (1)
- wenigstens zwei einander gegenüberliegend angeordnete Federarme (15) zum Einfügen in die im wesentlichen schlitzförmigen Durchbrechungen (16) des Anbauteils (3), welche in Fügerichtung des Anbauteiles (3) so angestellt sind, dass vor der Montage des Anbauteils (3) eine formschlüssige Fügung des Anbauteils (3) an die flächige Struktur (4) ermöglicht ist, und ferner
- ein Befestigungsmittel zum Einfügen in das Montageloch (10) und hinterschneidenden Eingriff mit der flächigen Struktur (4) aufweist.

2. Befestigungssystem nach Anspruch 1,
**dadurch gekennzeichnet,**
**dass** das Befestigungsmittel zum Einfügen in das Montageloch (10) aus wenigstens zwei einander gegenüberliegend angeordneten Spreizschenkeln (12) gebildet ist.

3. Befestigungssystem nach Anspruch 2,
**dadurch gekennzeichnet,**
**dass** die Spreizschenkel (12) eine Stellschraube (19) zum Einstellen der Spreizung aufweisen.

4. Befestigungssystem nach einem der vorhergehenden Ansprüche,
**dadurch gekennzeichnet,**
**dass** das Befestigungselement mit Mitteln versehen ist, um zu verhindern, dass die Federarme (15) nach Einfügen in die im wesentlichen schlitzförmigen Durchbrechungen (16) des Anbauteils (3) durch eine Bewegung des Befestigungselements (1) relativ zum Anbauteil (3) aus der Durchbrechung (16) gelangen.

5. Befestigungssystem nach Anspruch 4,
**dadurch gekennzeichnet,**
**dass** die Federarme (15) eine, insbesondere knickförmige Verformung (6) aufweisen.

6. Befestigungssystem nach Anspruch 5,
**dadurch gekennzeichnet,**
**dass** die Verformungen (6) der Federarme (15) mit Ausstanzungen ("Augen") versehen sind.

7. Befestigungssystem nach einem der vorhergehenden Ansprüche,
**dadurch gekennzeichnet,**
**dass** die Federarme (15) mit versteifenden Verprägungen, insbesondere Sicken (2), versehen sind.

8. Befestigungssystem nach einem der vorhergehenden Ansprüche,
**dadurch gekennzeichnet,**
**dass** die Federarme (15) eine endständige Lasche (8) zum Einfügen in die Durchbrechungen (16) aufweisen.

9. Befestigungssystem nach einem der vorhergehenden Ansprüche,
**dadurch gekennzeichnet,**
**dass** die Federarme (15) Laschen (14) aufweisen, welche bei Montage des Anbauteils (3) an der flächigen Struktur (4) zur formschlüssigen Anlage auf dem Anbauteil (3) gelangen.

10. Befestigungssystem nach einem der vorhergehenden Ansprüche,
**dadurch gekennzeichnet,**
**dass** die Stärke der Federarme (15) und der Spreizschenkel (12) im Bereich von 0,5 bis 2 mm, vorzugsweise 0,5 bis 1 mm, liegt.

11. Befestigungssystem nach einem der vorhergehenden Ansprüche,
**dadurch gekennzeichnet,**
**dass** die Federarme (15) und die Spreizschenkel (12) aus elastischem Material, insbesondere Federstahlblech oder Kunststoff, gefertigt sind.

12. Befestigungssystem nach einem der vorhergehenden Ansprüche,
**dadurch gekennzeichnet,**
**dass** die Federarme (15) und die flächige Struktur (4) nach Montage des Anbauteils (3) an der flächigen Struktur (4) eine im wesentlichen komplementäre Form aufweisen.

13. Verwendung des Befestigungssystems nach einem der vorhergehenden Ansprüche zur Befestigung von Anbauteilen im Automobilbau, insbesondere zur Befestigung von Türblenden an Türkarosserieabschnitten.

## Claims

1. Fitting system with an attachment part (3) and a fitting element (1) for the pre-assembly onto an attachment part (3), and for the forcible positive undercut assembly of the attachment part (3) onto a two-dimensional structure (4) incorporating an assembly hole (10), whereby the attachment part incorporates a substantially rectangular perforation (11), and two substantially slot-shaped perforations (16) extending in parallel to the short sides of the same and within an extension of the long sides of the same at least within the projection towards the plane of the rectangular perforation (11), whereby the attachment element (1)
- incorporates at least two opposingly positioned spring arms (15) for insertion into the substantially slot-shaped perforations (16) of the attachment part (3), which are positioned in jointing direction of the attachment part (3) in such a way that a positive jointing of the attachment part (3) to the two-dimensional structure (4) is possible prior to the assembly, and also
- a fitting means for the jointing into the assembly hole (10) and for the undercut engagement with the two-dimensional structure (4).

2. Fitting system according to Claim 1, **characterised in that** the fitting means for the jointing into the assembly hole (10) consists of at least two opposingly positioned straddle shanks (12).

3. Fitting system according to Claim 2, **characterised in that** the straddle shanks (12) incorporate a set screw (19) for the adjusting of the straddle distance.

4. Fitting system according to one of the preceding Claims, **characterised in that** the fitting system is equipped with means in order to prevent that the spring arms (15) are pulled from the perforation (16) following the jointing into the substantially slot-shaped perforations (16) of the attachment part (3) by a movement of the fitting element (1) relative to the attachment part (3).

5. Fitting system according to Claim 4, **characterised in that** the spring arms (15) incorporate a deformation (6), especially a bent deformation.

6. Fitting system according to Claim 5, **characterised in that** the deformations (6) of the spring arms (15) are equipped with punch-outs ("eyes").

7. Fitting system according to one of the preceding Claims, **characterised in that** the spring arms (15) are equipped with reinforcing embossments, especially overlays (2).

8. Fitting system according to one of the preceding Claims, **characterised in that** the spring arms (15) incorporate a tab (8) at their ends, for an insertion into the perforations (16).

9. Fitting system according to one of the preceding Claims, **characterised in that** the spring arms (15) incorporate tabs (14), which positively abut against the attachment part (3) during the assembly of the said attachment part (3) onto the two-dimensional structure (4).

10. Fitting system according to one of the preceding Claims, **characterised in that** the thickness of the spring arms (15) and the straddle shanks (12) lies within a range of 0,5 to 2mm, and preferably between 0,5 and 1mm.

11. Fitting system according to one of the preceding Claims, **characterised in that** the spring arms (15) and the straddle shanks (12) are manufactured from an elastic material, especially sprung sheet steel or plastic.

12. Fitting system according to one of the preceding Claims, **characterised in that** the spring arms (15) and the two-dimensional structure (4) take on a substantially complimentary form following the assembly of the attachment part (3) onto the two-dimensional structure (4)

13. Use of the fitting system according to one of the preceding Claims for the fitting of attachment parts within the automotive industry, especially for the fitting of door trims to door panel sections.

## Revendications

1. Système de fixation comprenant une pièce rapportée (3) et un élément de fixation (1) à prémonter sur la pièce rapportée puis à monter avec verrouillage par combinaison de formes et par friction avec des contredépouilles sur une structure plate (4) percée d'un trou de montage (10), la pièce rapportée présentant une ouverture essentiellement rectangulaire (11) et deux ouvertures (16) essentiellement en forme de fentes, disposées au moins, en projection sur le plan de l'ouverture rectangulaire, parallèlement au côté court de cette ouverture et dans le prolongement des côtés longs de celle-ci, étant prévu que l'élément de fixation (1) comprend :
- au moins deux bras élastiques (15) disposés face à face pour être introduits dans les ouvertures (16) en forme de fentes de la pièce rapportée et qui sont disposés selon la direction de jonction de la pièce rapportée (3), de manière qu'avant le montage de celle-ci, il est possible de réaliser une jonction avec verrouillage par combinaison de formes, de la pièce rapportée (3) et de la structure (4),
- un moyen de fixation pour insérer l'élément de fixation dans le trou de montage (10) en le mettant en prise par des contredépouilles avec la structure plate (4).

2. Système de fixation selon la revendication 1, **caractérisé en ce que** le moyen de fixation, pour son introduction dans le trou de montage (10), comporte au moins deux ailes écartables (12) disposées face à face.

3. Système de fixation selon la revendication 2, **caractérisé en ce que** pour régler l'écartement des ailes (12) celles-ci présentent une vis de réglage (19).

4. Système de fixation selon une des revendications précédentes, **caractérisé en ce que** l'élément de fixation est équipé de moyens pour éviter que les bras élastiques (15), après leur insertion dans les ouvertures (16) essentiellement en forme de fentes de la pièce rapportée (3), puissent par un déplacement de l'élément de fixation (11) par rapport à la pièce rapportée (3) sortir de l'ouverture (16).

5. Système de fixation selon la revendication 4, **caractérisé en ce que** les bras élastiques (15) comportent une partie en forme (6) notamment avec des coudes.

6. Système de fixation selon la revendication 5, **caractérisé en ce que** les parties en forme (6) des bras élastiques (15) présentent des découpes («yeux »).

7. Système de fixation selon une des revendications précédentes, **caractérisé en ce que** les bras élastiques (15) portent des empreintes de rigidification, notamment des moulures (2).

8. Système de fixation selon une des revendications précédentes, **caractérisé en ce que** les bras élastiques (15) présentent chacun une patte d'extrémité (8) pour introduction dans les ouvertures (16).

9. Système de fixation selon une des revendications précédentes, **caractérisé en ce que** les bras élastiques (15) présentent des pattes (14) qui, lors du montage de la pièce rapportée (3) sur la structure (4) viennent s'appliquer avec verrouillage par combinaison de formes sur la pièce rapportée (3).

10. Système de fixation selon une des revendications précédentes, **caractérisé en ce que** l'épaisseur des bras élastiques (15) et des ailes écartables (12) est comprise entre 0,5 et 2 mm, de préférence entre 0,5 et 1 mm.

11. Système de fixation selon une des revendications précédentes, **caractérisé en ce que** les bras élastiques (15) et les ailes écartables (12) sont fabriqués en un matériau élastique, notamment une tôle d'acier élastique ou une matière plastique.

12. Système de fixation selon une des revendications précédentes, **caractérisé en ce que** les bras élastiques (15) et la structure plate présentent, après montage de la pièce rapportée (3) sur de la structure plate (4), essentiellement une complémentarité de formes.

13. Utilisation du système de fixation selon une des revendications précédentes, pour fixer des pièces rapportées dans la construction automobile, notamment pour fixer des panneaux de portière sur des parties de carrosserie de portière.
